# EUROPÄISCHE PATENTANMELDUNG

(11) **EP 0 659 996 A2**
(43) Veröffentlichungstag der Anmeldung: **28.06.1995**
(21) Anmeldenummer: 94119030.8
(22) Anmeldetag: 02.12.1994
(51) Int. Cl.: F02D 41/26, F02D 41/22, F02D 41/02, H02P 7/00, G05B 13/02

(54) **Einrichtung zum Diagnostizieren und Regeln eines Verbrennungs- oder Elektromotors**

(30) Priorität: 09.12.1993 DE 4342059
(71) Anmelder: Daimler-Benz Aerospace Aktiengesellschaft, D-81663 München (DE)
(72) Erfinder: Müller, Peter, D-82008 Unterhaching (DE)

(57) **Zusammenfassung**

Die Erfindung bezieht sich auf eine Einrichtung zum Diagnostizieren und Regeln eines Verbrennungs- oder Elektromotors, bei der Signale wie Schall, Temperatur, Spannung und andere von entsprechenden Sensoren aufgenommen werden und über ein neuronales Netzwerk mit einer Fuzzy-Logik ausgewertet und zur Regelung des Motors sowie zur Fehlerdiagnose und Fehlerlokalisierung verwendet werden. Ein Ausführungsbeispiel ist erläutert und skizziert.

## Beschreibung

Die Erfindung bezieht sich auf eine Einrichtung zum Diagnostizieren und Regeln eines Verbrennungs- oder Elektromotors gemäß dem Oberbegriff des Anspruchs 1.

Solche Einrichtungen sind beim Stand der Technik in den verschiedensten Ausführungsformen und für die verschiedensten Zwecke bekannt, jedoch weisen alle diese bekannten Maßnahmen und Einrichtungen spezialisierte, für jede Regelung gesonderte und voneinander getrennte Verfahren und Anordnungen auf. Beispielsweise wird der Zündzeitpunkt drehzahlabhängig, ohne Rücksicht auf die Motortemperaur bestimmt. Ebenso werden Inspektionsintervalle nach gefahrenen Kilometern und nicht nach dem tatsächlich notwendigen Bedarf angezeigt.

Um Motoren optimal betreiben und verwenden zu können, ist es erforderlich, daß diese beispielsweise mit einem bestimmten Benzin-Luftgemisch und mit einem entsprechend genauen Zündzeitpunkt versorgt werden. Dabei spielen unterschiedliche Faktoren, wie Drehzahl des Motors, die Temperatur, der Luftdruck usw. eine wichtige Rolle. Alle diese Faktoren müssen aber in bestimmten Abhängigkeiten zueinander gebracht werden und sind nicht gesondert, sondern miteinander zu verarbeiten und auszuwerten.

Als weiteres Kriterium ist der vom Motor abgegebene Schall zu betrachten und in die vorgenannte "Signalverarbeitung" einzubeziehen und zu verwerten, denn dieser gibt Informationen über den Rundlauf des Motors und das sogenannte Klopfen, das bei zu hohen Drehzahlen oder bei Verwendung eines nicht optimalen Treibstoffes etc. auftritt. Für alle diese komplexen Vorgänge gibt es nach dem heutigen Stand der Technik keine hinreichenden Lösungen, die allen Faktoren gemeinsam und "quasi gleichzeitig" in ihrer komplexen Abhängigkeit gerecht werden.

Der vorliegenden Erfindung liegt die Aufgabe zugrunde, eine Einrichtung der oben genannten Art zu schaffen, mit der alle vorgenannten Parameter miteinander in einer einzigen Einrichtung verarbeitet und ausgewertet werden.

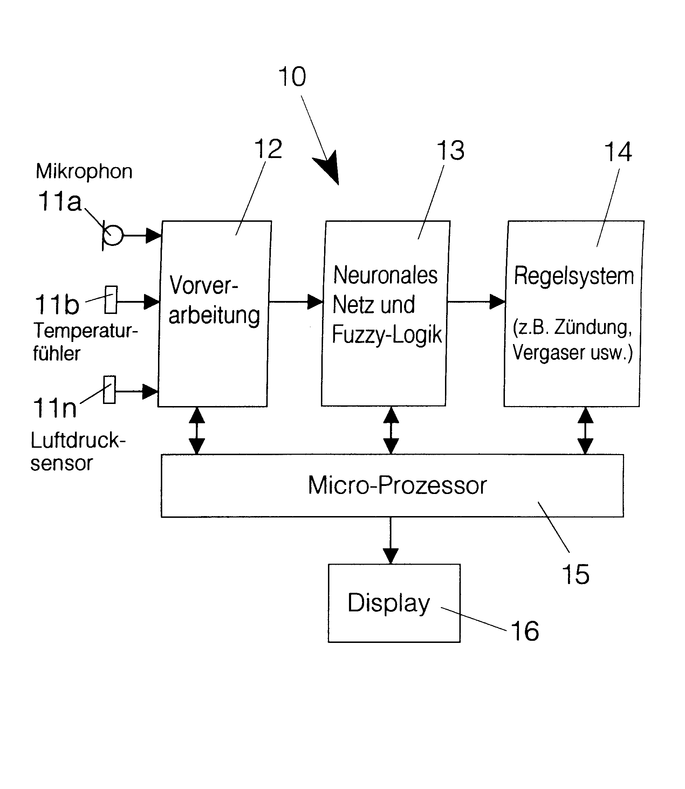

Diese Aufgabe wird durch die im Anspruch 1 aufgezeigten Maßnahmen gelöst. In den Unteransprüchen sind Ausgestaltungen und Weiterbildungen angegeben und in der nachfolgenden Beschreibung ist ein Ausführungsbeispiel für einen Verbrennungsmotor erläutert und in der einzigen Figur der Zeichnung skizziert.

Der allgemeine Erfindungsgedanke sieht vor, dem Motor Sensoren für Schall, Temperatur, Druckluft und gegebenenfalls weiterer Sensoren für beispielsweise Kompression, Schwerpunktsvelagerung etc. zuzuordnen und deren Signale über ein neuronales Netzwerk und eine Fuzzylogik auszuwerten. Die resultierenden Ergebnisse werden dann zur Regelung des Motors und zur Fehlerlokalisierung verwendet.

Das in der Figur skizzierte Ausführungsbeispiel zeigt eine Realisierung des vorbeschriebenen Erfindungsgedankens. Hier wird der von einem Verbrennungsmotor abgegebene Schall durch ein Mikrofon aufgefangen und in elektrische Schwingungen umgewandelt, die einem elektronischen Baustein zur Vorverarbeitung eingehen. Des weiteren sind Sensoren für die Temperatur und den Luftdruck angeordnet, deren elektrische Signale ebenfalls dem vorgenannten Vorverarbeitungsbaustein - nachstehend nur mehr "Vorverarbeitung" genannt - eingegeben werden. Diese Vorverarbeitung dient dazu, alle in ihr eingegebenen Datensignale aufzubereiten, nach entscheidenden Merkmalen zu selektieren und für das angeschlossene neuronale Netz und dessen Fuzzy-Logik, sowie für den Mikroprozessor anzupassen.

Das neuronale Netz schafft zusammen mit der Fuzzy-Logik die Entscheidungskriterien, die für die nachfolgende Regelung in dem Regelsystembaustein erforderlich sind. Auf Grund der besonderen Eigenschaften des neuronalen Netzes, - nämlich die Möglichkeit gestörte Informationen verarbeiten zu können, seine Anpassungsfähigkeit an veränderbare Bedingungen und seine Fähigkeit mit widersprüchlichen Regeln etc. zurecht zu kommen, - handelt es sich hier um ein "intelligentes System", das den Anforderungen eines komplexen Regelsystems gerecht wird.

Die Fuzzy-Logik zeichnet sich dadurch aus, daß sie mit einem sogenannten "Expertenwissen" die Eigenschaften herkömmlicher Regelungen übertrifft. Das Rechnersystem im Mikroprozessor führt die notwendige Kommunikation zwischen den einzelnen angeschlossenen Komponenten durch und gibt relevante Informationen über das Display aus. Die vorgeschlagene Einrichtung läßt sich problemlos als Modul in die vorhandene Bordelektronik des Motorfahrzeugs oder die Systemelektronik anderer Motoren einbauen

Durch die vorbeschriebene Einrichtung ist der Motor auch unter extremen Bedingungen aufeinen optimalen Wirkungsgrad einstellbar. Dies führt unter anderem zu einer Verlängerung der Lebensdauer und zu einer nicht zu unterschätzenden Verringerung des Brennstoffverbrauchs. Besonders aber muß der Vorteil hervorgehoben werden, der darin liegt, daß ständig die Möglichkeit gegeben ist, Diagnosen, d.h. Fehler zu lokalisieren und anzuzeigen. So lassen sich Frühschäden am Motor und seinen Übertragungselementen sofort erkennen und somit größere Folgeschäden vermeiden. Die Reparaturanfälligkeit wird ganz erheblich minimiert.

## Patentansprüche

1. Einrichtung zum Diagnostizieren und Regeln eines Verbrennungs- oder Elektromotors, dem Sensoren zur Signalaufnahme und -ausgabe der entsprechend in elektrische Signale gewandelten Daten zugeordnet ist und einem Vorverarbeitungsbaustein zur Aufbereitung und Selektion eingehen, dadurch gekennzeichnet, daß den Sensoren (11 a - 11 n) und dem Vorverarbeitungsbaustein (12) ein neuronales Netzwerk mit einer Fuzzy-Logik (13) zur Verarbeitung ihrer Signale zu Entscheidungskriterien für ein komplexes Regelsystem (14) zugeordnet ist, und das Rechnersystem eines Mikroprozessors (15) die Kommunikation zwischen den einzelnen Komponenten (12, 13, 14) durchführt sowie die relevanten Informationsdaten über ein Display (16) ausgibt.

2. Einrichtung nach Anspruch 1, dadurch gekennzeichnet, daß als Sensoren (11 a - 11 n) Temperaturfühler, Luftdrückmesser, Strom-und Spannungsmesser bzw. -Regler und/oder Mikrophone verwendbar sind.

3. Einrichtung nach Anspruch 1 oder 2, dadurch gekennzeichnet, daß die Fuzzy-Logik des neuronalen Netzwerkes (13) die Regelung der Treibstoffzufuhr, des Zündzeitpunktes, der Vergasereinstellung, der Stromzufuhr und der Drehzahl durchführt.

4. Einrichtung nach einem der Ansprüche 1 bis 3, dadurch gekennzeichnet, daß die vom neuronalen Netzwerk (13) über den Mikroprozessor (15) und das Display (16) ausgegebenen Signale zur Prüfung und Diagnose des Motors herangezogen werden.
